# EUROPEAN PATENT SPECIFICATION

(11) **EP 4 393 629 B1**
(45) Date of publication and mention of the grant of the patent: **10.09.2025**
(21) Application number: 22901622.5
(22) Date of filing: 15.11.2022
(51) Int. Cl.: B23K 20/10, H01M 50/54, B23K 101/36, H01M 50/536, H01M 50/538

(54) **ULTRASONIC WELDING APPARATUS AND ELECTRODE ASSEMBLY MANUFACTURED THEREBY**
ULTRASCHALLSCHWEISSVORRICHTUNG UND DAMIT HERGESTELLTE ELEKTRODENANORDNUNG
DISPOSITIF DE SOUDAGE PAR ULTRASONS ET ENSEMBLE ÉLECTRODE FABRIQUÉ PAR CELUI-CI

(30) Priority: 30.11.2021 KR 20210169084
(43) Date of publication of application: 03.07.2024
(73) Proprietor: LG Energy Solution, Ltd., Seoul 07335 (KR)
(72) Inventor: KWON, Gi Hwan, Daejeon 34122 (KR)
(74) Representative: Plasseraud IP
(86) International application number: PCT/KR2022/018000
(87) International publication number: WO 2023/101264

(56) References cited:
- WO-A1-2020/120726
- CN-C- 100 522 449
- JP-A- 2007 330 851
- JP-B2- 4 609 169
- KR-A- 20180 119 365
- KR-B1- 100 745 271
- KR-B1- 102 323 041
- US-A1- 2004 020 580
- US-A1- 2006 169 388

## Description

### TECHNICAL FIELD

The present invention relates to an ultrasonic welding apparatus for welding a plurality of electrode tabs of an electrode assembly, and an electrode assembly manufactured by the ultrasonic welding apparatus.

### BACKGROUND ART

Secondary batteries are rechargeable unlike primarily batteries, and also, the possibility of compact size and high capacity is high. Thus, recently, many studies on secondary batteries are being carried out. As technology development and demands for mobile devices increase, the demands for secondary batteries as energy sources are rapidly increasing.

Rechargeable batteries are classified into coin type batteries, cylindrical type batteries, prismatic type batteries, and pouch type batteries according to a shape of a battery case. In such a secondary battery, an electrode assembly mounted in a battery case is a chargeable and dischargeable power generating device having a structure in which an electrode and a separator are stacked.

The electrode assembly may be approximately classified into a jelly-roll type electrode assembly in which a separator is interposed between a positive electrode and a negative electrode, each of which is provided as the form of a sheet coated with an active material, and then, the positive electrode, the separator, and the negative electrode are wound, a stacked type electrode assembly in which a plurality of electrodes with a separator therebetween are sequentially stacked, and a stack & folding type electrode assembly in which stacked type unit cells are wound together with a separation film having a long length.

Particularly, each of the stack type or stack and folding type electrode assemblies includes the plurality of electrode tabs connected to the plurality of electrodes respectively, and the plurality of electrode tabs are generally welded to each other by an ultrasonic welding apparatus. However, since each of the plurality of electrode tabs has a thickness of several micrometers, an ultrasonically welded portion may be easily broken by disturbance or the like. Therefore, the ultrasonic welding apparatus for solving these concerns is required.

Examples of ultrasonic welding apparatuses according to the prior art are disclosed in documents US2006/169388, WO2020/120726, JP4609169 and CN100522449.

### DISCLOSURE OF THE INVENTION

### TECHNICAL PROBLEM

One object of the present invention for solving this problem is to provide an ultrasonic welding apparatus that minimizes a risk of breakage or cracks occurring in a welded portion at which a plurality of electrode tabs are welded.

Another object of the present invention for solving the above problem is to provide an electrode assembly manufactured by the ultrasonic welding apparatus.

### TECHNICAL SOLUTION

An ultrasonic welding apparatus as laid out in appended claim 1

A length of the protrusion part in the first direction may be less than a width of each of the plurality of electrode tabs.

An interval between each of both ends of the protrusion part and each of both edges of each of the plurality of electrode tabs may be 1/45 to 1/30 of the width of each of the plurality of electrode tabs.

A length of the inner protrusion part may be greater than that of each of the pair of outer protrusion parts in the first direction.

The pair of outer protrusion parts may have a symmetrical shape with respect to the inner protrusion part.

In the inner protrusion part, the plurality of first protrusions may be arranged along the first direction to form a plurality of columns.

In each of the pair of outer protrusion parts, the plurality of second protrusions may be arranged along a virtual curve line.

The curve line may form a portion of an ellipse.

A maximum distance between the inner protrusion part and each of the pair of outer protrusion parts in the second direction may be 0.5 times to 0.75 times a width of the inner protrusion part in the second direction.

An electrode assembly as laid out in appended claim 7.

The welded portion may include a flat part which is provided at a portion of both sides in the width direction of each of the plurality of electrode tabs and on which the inner embo pattern and the pair of outer embo patterns are not formed.

A width of the flat part may be 1/45 to 1/30 of a width of each of the plurality of electrode tabs.

A length of the inner embo pattern may be greater than that of the outer embo pattern in the first direction.

The pair of outer embo patterns may have a symmetrical shape with respect to the inner embo pattern.

The inner embo pattern may form a plurality of columns in the first direction.

The pair of outer embo patterns may be formed along a virtual curve line.

The curve line may form a portion of an ellipse.

A maximum distance between the inner embo pattern and the outer embo pattern in the second direction may be 0.5 times to 0.75 times a width of the inner embo pattern in the second direction.

### ADVANTAGEOUS EFFECTS

According to the preferred embodiment of the present invention, the distance between the plurality of second embossings provided in the outer embo pattern may be greater than that between the plurality of first embossings constituting the inner embo pattern. Thus, the possibility of breakage or cracks occurring at the welded boundary due to the disturbance may be reduced, and even though the breakage or cracks occurs, the expansion of the breakage or cracks may be minimized.

In addition, the outer embo pattern may be formed along the curve line. Therefore, the possibility of breakage or cracks occurring at the welded boundary due to the disturbance may be more reduced, and even though the breakage or cracks occurs, the expansion of the breakage or cracks may be minimized.

In addition, since the embo pattern is not formed on the portion of both the sides of the welded portion in the width direction, the risk of the breakage or cracks occurring at both the edges of the welded portion may be minimized.

In addition, the effects that are obvious to those skilled in the art may be predicted from the configurations according to the embodiment of the present invention.

### BRIEF DESCRIPTION OF THE DRAWINGS

The following drawings attached in this specification illustrate a preferred embodiment of the present invention and function to make further understood the present invention along with the detailed description of the invention, and thus, the present invention should not be construed as being limited to only the drawings.
FIG. 1 is a schematic view of an ultrasonic welding apparatus according to an embodiment of the present invention.
FIG. 2 is an enlarged view of a protrusion part according to an embodiment of the present invention.
FIG. 3 is a perspective view of an electrode assembly according to another embodiment of the present invention.
FIG. 4 is a plan view illustrating a welded portion of the electrode assembly according to another embodiment of the present invention.
FIG. 5 is an enlarged view of a protrusion part according to a comparative example of the present invention.
FIG. 6 is a plan view illustrating a welded of an electrode assembly according to the comparative example of the present invention.

### MODE FOR CARRYING OUT THE INVENTION

Hereinafter, preferred embodiments of the present invention will be described in detail with reference to the accompanying drawings so that those of ordinary skill in the art can easily carry out the present invention. However, the present invention may be implemented in several different forms and is not limited or restricted by the following examples.

In order to clearly explain the present invention, detailed descriptions of portions that are irrelevant to the description or related known technologies that may unnecessarily obscure the gist of the present invention have been omitted, and in the present specification, reference symbols are added to components in each drawing. In this case, the same or similar reference numerals are assigned to the same or similar elements throughout the specification.

Also, terms or words used in this specification and claims should not be restrictively interpreted as ordinary meanings or dictionary-based meanings, but should be interpreted as meanings and concepts conforming to the scope of the present invention on the basis of the principle that an inventor can properly define the concept of a term to describe and explain his or her invention in the best ways.

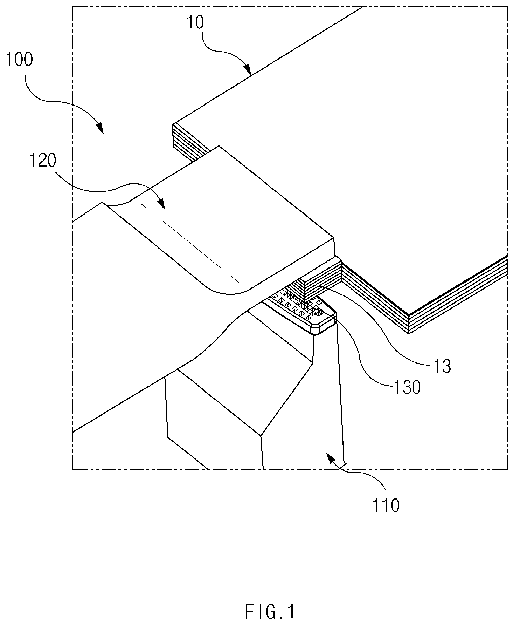

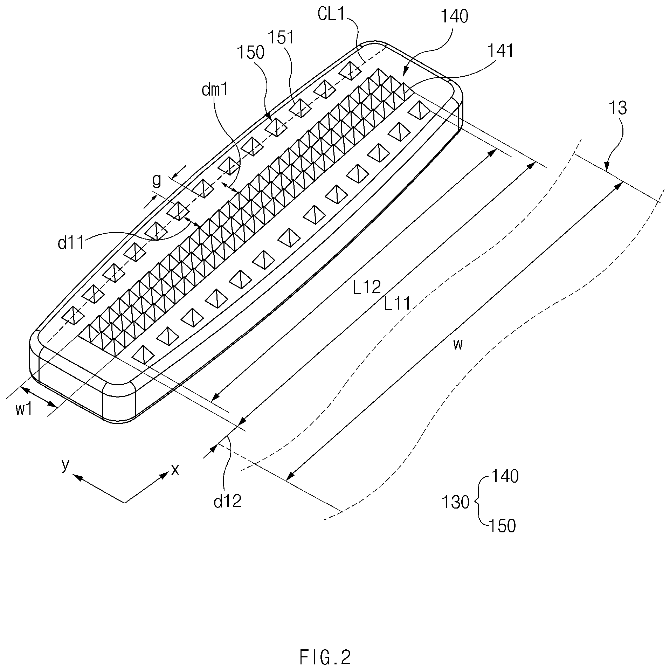

FIG. 1 is a schematic view of an ultrasonic welding apparatus according to an embodiment of the present invention, and FIG. 2 is an enlarged view of a protrusion part according to an embodiment of the present invention.

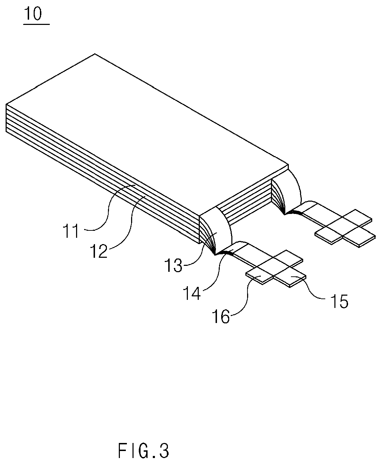

The ultrasonic welding apparatus 100 (hereinafter, referred to as a welding apparatus) according to this embodiment may weld a plurality of electrode tabs 13 of an electrode assembly 10 to each other. The welding apparatus 100 may form a welded portion 14 (see FIG. 3, hereinafter, referred to as a welded portion) by welding the plurality of electrode tabs 13. That is, the welded portion 14 may be a portion at which the plurality of electrode tabs 13 are welded to each other.

In more detail, the welding apparatus 100 may include an anvil 110 disposed at one side of the plurality of electrode tabs 13, a horn 120 facing the anvil 110 with the plurality of electrode tabs 13 therebetween, and a protrusion part 130 provided on at least one of the anvil 110 or the horn 120 to face the plurality of electrode tabs 13.

The anvil 110 may be disposed below the plurality of electrode tabs 13, and the horn 120 may be disposed above the plurality of electrode tabs 13.

A mutual distance of the anvil 110 and the horn 120 may be adjusted. For example, the horn 120 may be configured so that the distance to the anvil 110 is adjustable. Thus, the plurality of electrode tabs 13 may be pressed between the anvil 110 and the horn 120, and in this state, the horn 120 may vibrate at a high frequency to weld the plurality of electrode tabs 13 to each other. In more detail, ultrasonic waves generated by a vibrator may be amplified by a booster and then transmitted to the horn 120. Therefore, the horn 120 may press the plurality of electrode tabs 13 disposed on the anvil 110 at a certain load and also apply the amplified ultrasonic waves transmitted from the booster to the electrode tabs 13 to weld the plurality of electrode tabs 13 to each other. Since the configurations and operations of the ultrasonic vibrator and the booster are well-known, their detailed descriptions will be omitted.

The protrusion part 130 may be provided on at least one of the anvil 110 or the horn 120. Hereinafter, a case in which the protrusion part 130 is provided on each of the anvil 110 and the horn 120 will be described as an example.

Each of the protrusion parts 130 may face the plurality of electrode tabs 13. In more detail, one protrusion part 130 may be provided on a bottom surface of the anvil 110, and the other protrusion part 130 may be provided on a bottom surface of the horn 120. The protrusion part 130 provided on the anvil 110 may face the lower outermost electrode tab of the plurality of electrode tabs 13, and the protrusion part 130 provided on the horn 120 may face the upper outermost electrode tab of the plurality of electrode tabs 13. The protrusion part 130 provided on the anvil 110 may press the plurality of electrode tabs 13 at a lower side, and the protrusion part 130 provided on the horn 120 may press the plurality of electrode tabs 13 at an upper side.

The protrusion part 130 may include a plurality of protrusions 141 and 151 protruding toward the electrode tab 13. The plurality of protrusions 141 and 151 include a plurality of first protrusions 141 provided in an inner protrusion part 140 to be described later and a plurality of second protrusions 151 provided in an outer protrusion part 150 to be described later. The first protrusion 141 and the second protrusion 151 may have the same size and shape, but are not limited thereto.

Each of the plurality of first protrusions 141 and plurality of second protrusions 151 may have a cross-sectional area that is gradually narrowed as it approaches the electrode tab 13. For example, each of the plurality of first protrusions 141 and the plurality of second protrusions 151 may have a substantially polygonal pyramid shape.

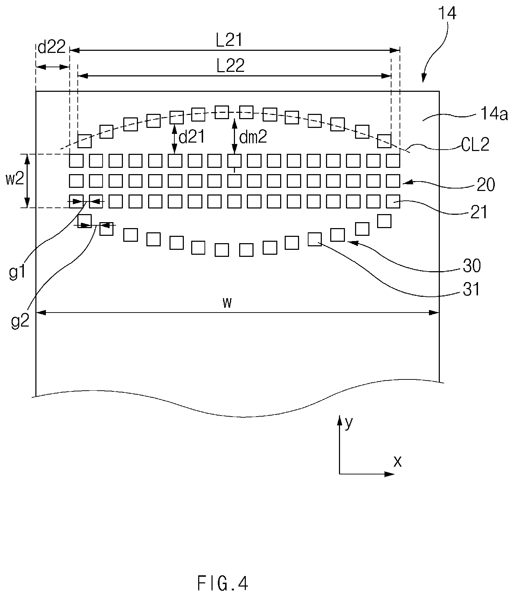

A plurality of embo patterns 20 and 30 (see FIG. 4) corresponding to the plurality of protrusions 131 and 141 may formed on the welded portion 14 (see FIG. 3) formed by welding the electrode tabs 13. This will be described in detail later.

In more detail, the protrusion part 130 may include the inner protrusion part 140 arranged along a first direction (a direction parallel to an x-axis of FIG. 2) parallel to a width direction of the electrode tab 13 and a pair of outer protrusion parts 150 disposed at both sides of the inner protrusion 140 in a second direction (a direction parallel to a y-axis of FIG. 2) and arranged at an interval wider than that between the plurality of first protrusions 141.

The inner protrusion part 140 may be formed by grouping the plurality of first protrusions 141. The inner protrusion part 140 may be arranged so that the plurality of first protrusions 141 form at least one row in the first direction. Preferably, the inner protrusion part 140 may be arranged so that the plurality of first protrusions 141 form a plurality of rows in the first direction.

The pair of outer protrusion parts 150 may have a symmetrical shape with respect to the inner protrusion part 140. However, this embodiment is not limited thereto.

Each of the pair of outer protrusion parts 150 may be formed by grouping the plurality of second protrusions 151. In each of the outer pair of protrusion parts 150, the plurality of second protrusions 151 may be arranged along a virtual curve line CL1. That is, each of the pair of outer protrusion parts 150 may be formed along the curve line CL1. The curve line CL1 may form a portion of an ellipse.

The number of columns formed by the plurality of second protrusions 151 may be less than the number of columns formed by the plurality of first protrusions 141. For example, the plurality of second protrusions 151 may be arranged along the curve line CL1 to form a single column, and the plurality of first protrusions 141 may be arranged along the first direction to form a plurality of columns.

Since each of the pair of outer protrusion parts 150 is formed along the curve line CL1, each of a pair of outer embo patterns 30 (see FIG. 4) to be described later may also be formed along the curve line CL2.

A distance g between the plurality of second protrusions 151 provided in the pair of outer protrusion parts 150 may be wider than that between the plurality of first protrusions 141 provided in the inner protrusion part 140. For example, the plurality of first protrusions 141 may be disposed adjacent to each other without forming an interval, and an interval between the plurality of second protrusions 151 may be greater than or equal to a width of each of the second protrusions 151.

In the first direction, a length L11 of the inner protrusion part 140 may be longer than a length L12 of each of the pair of outer protrusion parts 150. In the first direction, the length L11 of the inner protrusion part 140 may mean a length of the protrusion part 130.

The length of the protrusion part 130 in the first direction may be less than a width w of the electrode tab 13. That is, the length L11 of the inner protrusion part 140 in the first direction may be less than the width w of the electrode tab 13.

In more detail, a predetermined interval d12 may be formed between each of both ends of the protrusion part 130 and each of both edges of the electrode tab 13. An interval d12 may be 1/45 to 1/30 of the width w of the electrode tab 13. For example, the width w of the electrode tab 13 may be about 45 mm, and the interval d12 may be about 1 mm to about 1.5 mm.

As a result, while reliably welding the plurality of electrode tabs 13, a flat part 14a on which the embo patterns 20 and 30 are not formed at both edges in the width direction of the welded portion 14 (see FIG. 4) to be described later may be formed.

A distance d11 between the inner protrusion part 140 and each of the pair of outer protrusion parts 150 in the second direction gradually decreases outward in the first direction. Thus, the distance d11 between the inner protrusion part 140 and each of the pair of outer protrusion parts 150 in the second direction may be a maximum distance dm1 at a central portion of the protrusion part 130 in the first direction.

The maximum distance dm1 between the inner protrusion part 140 and each of the pair of outer protrusion parts 150 in the second direction may be 0.5 times to 0.75 times the width w1 of the inner protrusion part 140 in the second direction. For example, the width w1 of the inner protrusion part 140 may be about 4 mm, and the maximum distance dm1 between the inner protrusion part 140 and each of the pair of outer protrusion parts 150 may be about 2 mm to 3 mm.

As a result, while reliably welding the plurality of electrode tabs 13, breakage or cracks that may occur in the welded portion 14 (see FIG. 4) to be described later may be prevented from being expanded.

FIG. 3 is a perspective view of an electrode assembly according to another embodiment of the present invention, and FIG. 4 is a plan view illustrating a welded portion of the electrode assembly according to another embodiment of the present invention.

Hereinafter, an electrode assembly 10 manufactured by the above-described ultrasonic welding apparatus 100 will be described as another embodiment of the present invention.

The electrode assembly 10 according to this embodiment may include a plurality of electrodes 11 stacked with a separator 12 therebetween, a plurality of electrode tabs 13 connected to the plurality of electrodes 11, and a plurality of welded portions 14, which are formed by welding the plurality of electrode tabs 13 to each other.

Each of the electrodes 11 may be formed by applying active material slurry to an electrode collector in the form of a metal foil or a metal mesh. The plurality of electrodes 11 may be classified as positive electrodes or negative electrodes, Here, the positive electrode collector may include an aluminum material, and the negative electrode collector may include a copper material. The positive electrode and the negative electrode may be alternately stacked with the separator 12 therebetween.

Each of the electrode tab 13 may protrude from each of the plurality of electrodes 11 to act as a path through which electrons move between the inside and outside of the electrode assembly 10 together with an electrode lead 15.

The plurality of electrode tabs 13 connected to the positive electrode and the plurality of electrode tabs 13 connected to the negative electrode among the plurality of electrodes 12 may protrude in the same direction with respect to the electrode assembly 10 as illustrated in FIG. 3. However, the present invention is not limited thereto, and the plurality of electrode tabs 13 connected to the positive electrode and the plurality of electrode tabs 13 connected to the negative electrode may protrude in directions opposite to each other with respect to the electrode assembly 10.

A portion of the plurality of electrode tabs 13 may be welded to each other to form a welded portion 14. The plurality of electrode tabs 13 may get closer to each other toward the welded portion 14. A width of the welded portion 14 may be the same as that of the electrode tab 12. The welded portion 14 may be formed by the ultrasonic welding apparatus 100 described above.

The plurality of electrode tabs 13, more specifically, the electrode lead 15 may be connected to the welded portion 14 by spot welding or the like. When the electrode assembly 10 is accommodated in a battery case (not shown), one end of the electrode lead 15 may be connected to the plurality of electrode tabs 15, and the other end may protrude to the outside of the battery case.

A portion of the electrode lead 15 may be surrounded by an insulating part 16. For example, the insulating part 16 may include an insulating tape. The insulating part 16 may prevent electricity generated in the electrode assembly 10 from flowing to the battery case through the electrode lead 15. Since this is a well-known technique, a detailed description thereof will be omitted.

Referring to FIG. 4, embo patterns 20 and 30 may be formed on the welded portion 14. The embo patterns 20 and 30 may be formed by the protrusion parts 130 of the ultrasonic welding apparatus 10. The characteristics of the embo patterns 20 and 30 may correspond to the characteristics of the protrusion parts 130 described above.

The embo patterns 20 and 30 may include a plurality of embossings 21 and 31. The plurality of embossings 21 and 31 include a plurality of first embossings 21 provided in an inner embo pattern 20 to be described later and a plurality of second embossings 31 provided in a pair of outer embo patterns 30 to be described later. The first embossing 21 and the second embossing 31 may have the same size and shape, but are not limited thereto.

The embo patterns 20 and 30 may include an inner embo pattern 20 formed by the inner protrusion part 140 of the ultrasonic welding apparatus 10 and a pair of outer embo pattern 30 formed by the pair of outer protrusion parts 150 of the ultrasonic welding apparatus 10.

Hereinafter, it will be described in more detail with reference to FIGS. 2 and 4 together.

The inner embo pattern 20 extending along a first direction (a direction parallel to an x-axis of FIG. 4) parallel to a width direction of the electrode tab 13 and the pair of outer embo patterns 30 disposed at both sides of the inner embo pattern 20 with respect to a second direction (a direction parallel to a y-axis of FIG. 4) orthogonal to the first direction and formed at an interval wider than that between the inner embo pattern 20 may be formed on the welded portion 14.

The inner embo pattern 20 may be formed by grouping the plurality of first embossings 21. The inner embo pattern 20 may be arranged so that the plurality of first embo patterns 21 form at least one row in the first direction. Preferably, the inner embo pattern 20 may be arranged so that the plurality of first embo patterns 21 form a plurality of rows in the first direction.

The pair of outer embo patterns 30 may have a symmetrical shape with respect to the inner embo pattern 20. However, this embodiment is not limited thereto.

The pair of outer embo patterns 30 may form a welded boundary.

Each of the pair of outer embo patterns 30 may be formed by grouping the plurality of second embossings 31. Each of the pair of outer embo patterns 30 may be arranged so that the plurality of second embossings 31 are arranged along a virtual curve line CL2. That is, each of the pair of outer embo patterns 30 may be formed along the curve line CL2. The curve line CL2 may form a portion of an ellipse. The curve line CL2 may correspond to a curve line CL1 formed by each of the pair of outer protrusion parts 150 of the ultrasonic welding apparatus 100.

The number of columns formed by the plurality of second embossings 31 may be less than the number of columns formed by the plurality of first embossings 21. For example, the plurality of second embossings 31 may be arranged along the curve line CL2 to form a single column, and the plurality of first embossings 21 may be arranged along the first direction to form a plurality of columns.

Since each of the pair of outer embo pattern 30 is formed along the curve line CL2, the welded boundary may form the curve line.

An interval g2 between the plurality of second embossings 31 provided in each of the pair of outer embo pattern 30 may be wider than an interval g1 between the plurality of first embossings 21 provided in the inner embo pattern 20.

Thus, a risk of breakage or cracks occurring due to disturbance at the welded boundary may be reduced, and even if the breakage or cracks occur, expansion of the breakage or cracks may be restricted.

In the first direction, a length L21 of the inner embo pattern 20 may be longer than a length L22 of each of the pair of outer embo pattern 30. The length L21 of the inner embo pattern 20 may be equal to or slightly shorter than a length L11 of the inner protrusion part 140 of the ultrasonic welding apparatus 100. The length L22 of each of the pair of outer embo patterns 30 may be equal to or slightly shorter than a length L12 of each of the pair of outer protrusion parts 150 of the ultrasonic welding apparatus 100.

In the first direction, the length L21 of the inner embo pattern 20 may mean a length of each of the embo patterns 20 and 30.

The length of each of the embo patterns 20 and 30 in the first direction may be less than a width w of the electrode tab 13. That is, the length L11 of the inner embo pattern 20 in the first direction may be less than the width w of the welded portion 14.

The welded portion 14 may include a flat part 14a which is provided at each of both sides in the width direction and on which the inner embo pattern 20 and the pair of outer embo patterns 30 are not formed. The embo patterns 20 and 30 may not be formed on some of both sides of the welded portion 14 in the width direction. As a result, the embo patterns 20 and 30 may not invade both edges of the welded portion 14 in the width direction or may not be formed adjacent to both the edges of the welded portion 14 in the width direction, and thus, the risk of damage such as cracks or breakage at both the edges of the welded portion 14 in the width direction may be minimized.

A width d22 of the flat part 14a may be 1/45 to 1/30 of the width w of the electrode tab 13, that is, the width w of the welded portion 14. For example, the width w of the electrode tab 13 may be about 45 mm, and the width d22 of the flat part 14a may be 1 mm to 1.5 mm.

As a result, while the welded portion 14 is stably maintained, the risk of the damage such as the cracks or the breakages at both the edges of the welded portion 14 in the width direction may be minimized. If the width d22 of the flat part 14a is less than 1/45 of the width w of the electrode tab 13, each of the embo patterns 20 and 30 may be too close to both the edges of the welded portion 14 in the width direction, and thus, the risk of the damage such as the cracks or the breakage may occur at both the edges of the welded portion 14 in the width direction. Conversely, when the width d22 of the flat part 14a exceeds 1/30 of the width w of the electrode tab 13, welding force between the plurality of electrode tabs 13 may be weakened, and the welded portion 14 may not be maintained stably.

A distance d21 between the inner embo pattern 20 and each of the pair of the outer embo pattern 30 in the second direction gradually decreases outward in the first direction. Therefore, the distance d21 between the inner embo pattern 20 and each of the pair of outer embo patterns 30 in the second direction may be a maximum distance dm2 at a center of the welded portion 14 in the first direction.

The maximum distance dm2 between the inner embo pattern 20 and each of the pair of outer embo patterns 30 in the second direction may be 0.5 times to 0.75 times the width w2 of the inner embo pattern 20 in the second direction. For example, the width w2 of the inner embo pattern 20 may be about 4 mm, and the maximum distance dm2 between the inner embo pattern 20 and each of the pair of outer embo patterns 30 may be about 2 mm to 3 mm.

As a result, the welded portion 14 may be stably maintained while restricting the expansion of the breakage or the cracks that may occur in the inner embo pattern 20. If the maximum distance dm2 is less than 0.5 times the width w2 of the inner embo pattern 20, since a line formed by each of the pair of outer embo patterns 30 approaches a straight line rather than a curved line CL2, it may be difficult to exert the effect of restricting the expansion of the breakage or the cracks that may occur at the inner embo pattern 20. Conversely, when the maximum distance dm2 is greater than 0.75 times the width w2 of the inner embo pattern 20, an arrangement density per unit area of the embo patterns 20 and 30 may be too low, and thus, the welding force between the plurality of electrode tabs 13 may be weakened, and the welded portion 14 may not be stably maintained.

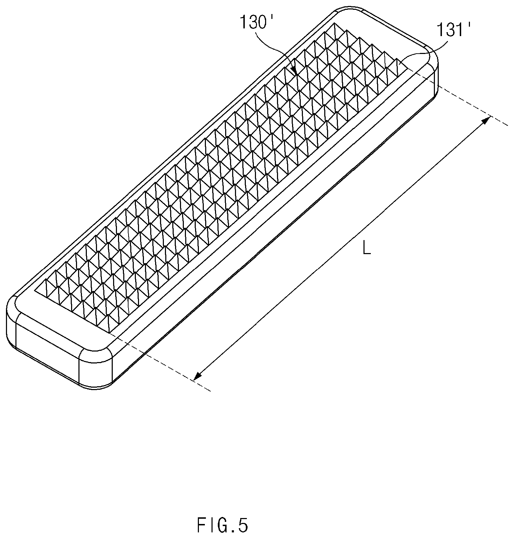

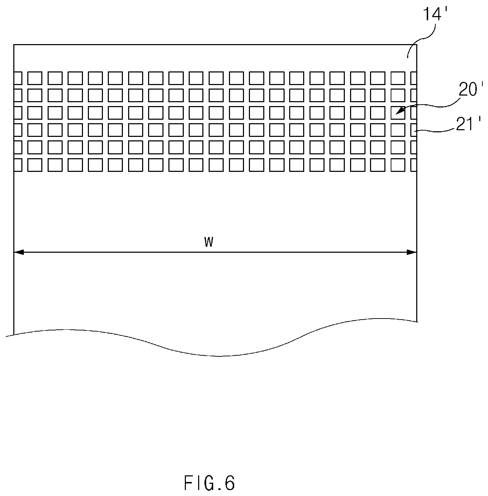

FIG. 5 is an enlarged view of a protrusion according to a comparative example of the present invention, and FIG. 6 is a plan view illustrating a welded portion of an electrode assembly according to the comparative example of the present invention.

Referring to FIGS. 5 and 6, a length L of a protrusion part 130' according to a comparative example may be equal to or greater than a width w of a welded portion 14'. Thus, an embo pattern 20' formed on the welded portion 14' by the protrusion part 130' may invade or be adjacent to both edges of the welded portion 14' in a width direction. As a result, there is a high possibility that damage such as cracks or breakage may occur at both edges of the welded portion 14' in the width direction.

In addition, a plurality of protrusions 131' provided in the protrusion part 130' may be arranged at regular intervals. Therefore, a plurality of embossings 21' provided in the embo pattern 20' formed on the welded portion 14' may also be arranged at regular intervals, and the welded boundary may form a straight line.

As a result, the breakage or cracks may easily occur at a boundary of the embo pattern 20', and there is a problem in that the breakage or the cracks are quickly expanded.

According to this comparative example, those skilled in the art will be able to more easily understand the configuration and effect of the present invention.

The above-disclosed subject matter is to be considered illustrative, and not restrictive, and the appended claims are defining the scope of the invention.

Thus, the embodiment of the present invention is to be considered illustrative, and not restrictive, and the the present invention is not limited to the foregoing embodiment.

Therefore, the scope of the present invention is defined not by the detailed description of the invention but by the appended claims.

### [Description of the Symbols]

| | | | |
|---|---|---|---|
| 10: | Electrode assembly | 11: | Electrode |
| 12: | Separator | 13: | Electrode tab |
| 14: | Welded portion | 15: | Electrode lead |
| 20: | Inner embo pattern | 21: | First embossing |
| 30: | Outer embo pattern | 31: | Second embossing |
| 100: | Ultrasonic welding apparatus | 110: | Anvil |
| 120: | Horn | 130: | Protrusion part |
| 140: | Inner protrusion part | 141: | First protrusion |
| 150: | Outer protrusion part | 151: | Second protrusion |

## Claims

1. An ultrasonic welding apparatus (100), intended to weld a plurality of electrode tabs (13) of an electrode assembly (10) to each other, the ultrasonic welding apparatus (100) comprising:
an anvil (110) intended to be disposed at one side of the plurality of electrode tabs (13);
a horn (120) intended to be disposed to face the anvil (110) with the plurality of electrode tabs (13) therebetween; and
a protrusion part (130) provided on at least one of the anvil (110) and the horn (120) intended to face the plurality of electrode tabs (13),
wherein the protrusion part (130) comprises:
an inner protrusion part (140) in which a plurality of first protrusions (141) are arranged along a first direction parallel to a width direction of the electrode tabs (13); and
a pair of outer protrusion parts (150) which are disposed at both sides of the inner protrusion part (140) in a second direction orthogonal to the first direction and in which a plurality of second protrusions (151) are arranged an interval wider than that between the plurality of first protrusions (141), **characterized in that**
a distance (d11) between the inner protrusion part (140) and each of the pair of outer protrusion parts (150) in the second direction gradually decreases outward in the first direction.

2. The ultrasonic welding apparatus (100) of claim 1, wherein a length of the protrusion part (130) in the first direction is less than a width of each of the plurality of electrode tabs (13).

3. The ultrasonic welding apparatus (100) of claim 1, wherein a length of the inner protrusion part (140) is greater than that of each of the pair of outer protrusion parts (150) in the first direction.

4. The ultrasonic welding apparatus (100) of claim 1, wherein, in the inner protrusion part (140), the plurality of first protrusions (141) are arranged along the first direction to form a plurality of columns.

5. The ultrasonic welding apparatus of claim 1, wherein, in each of the pair of outer protrusion parts (150), the plurality of second protrusions (151) are arranged along a virtual curve line.

6. The ultrasonic welding apparatus (100) of claim 5, wherein a maximum distance between the inner protrusion part (140) and each of the pair of outer protrusion parts (150) in the second direction is 0.5 times to 0.75 times a width of the inner protrusion part (140) in the second direction.

7. An electrode assembly (10) comprising:
a plurality of electrodes (11) stacked with a separator (12) therebetween;
a plurality of electrode tabs (13) connected to the plurality of electrodes (11); and
a welded portion (14), which is formed by welding the plurality of electrode tabs (13) to each other,
wherein the welded portion (14) comprises:
an inner embo pattern (20) extending along a first direction parallel to a width direction of each of the plurality of electrode tabs (13); and
a pair of outer embo patterns (30) disposed at both sides of the inner embo pattern (20) in a second direction orthogonal to the first direction and formed at an interval wider than that between the inner embo patterns (20), **characterized in that**
a distance (d21) between the inner embo pattern (20) and each of the pair of outer embo patterns (30) in the second direction gradually decreases outward in the first direction.

8. The electrode assembly (10) of claim 7, wherein the welded portion (14) comprises a flat part which is provided at a portion of both sides in the width direction of each of the plurality of electrode tabs (13) and on which the inner embo pattern (20) and the pair of outer embo pattern (30) are not formed.

9. The electrode assembly (10) of claim 8, wherein a width of the flat part is 1/45 to 1/30 of a width of each of the plurality of electrode tabs (13).

10. The electrode assembly (10) of claim 7, wherein a length of the inner embo pattern (20) is greater than that of each of the pair of outer embo pattern (30) in the first direction.

11. The electrode assembly (10) of claim 7, wherein the inner embo pattern (20) forms a plurality of columns in the first direction.

12. The electrode assembly of claim 8, wherein the pair of outer embo patterns are formed along a virtual curve line.

13. The electrode assembly (10) of claim 12, wherein a maximum distance between the inner embo pattern (20) and each of the pair of outer embo patterns (30) in the second direction is 0.5 times to 0.75 times a width of the inner embo pattern (20) in the second direction.

## Patentansprüche

1. Ultraschallschweißvorrichtung (100), welche dafür vorgesehen ist, eine Mehrzahl von Elektrodenstegen (13) einer Elektrodenanordnung (10) miteinander zu verschweißen, wobei die Ultraschallschweißvorrichtung (100) umfasst:
einen Amboss (110), welcher dafür vorgesehen ist, an einer Seite der Mehrzahl von Elektrodenstegen (13) angeordnet zu sein;
ein Horn (120), welches dafür vorgesehen ist, derart angeordnet zu sein, dass es mit der Mehrzahl von Elektrodenstegen (13) dazwischen dem Amboss (110) zugewandt ist; und
einen an wenigstens einem aus dem Amboss (110) und dem Horn (120) bereitgestellten Vorsprungteil (130), welcher dafür vorgesehen ist, der Mehrzahl von Elektrodenstegen (13) zugewandt zu sein,
wobei der Vorsprungteil (130) umfasst:
einen inneren Vorsprungteil (140), bei welchem eine Mehrzahl von ersten Vorsprüngen (141) entlang einer zu einer Breitenrichtung der Elektrodenstege (13) parallelen ersten Richtung angeordnet ist; und
ein Paar von äußeren Vorsprungteilen (150), welche in einer zu der ersten Richtung orthogonalen zweiten Richtung an beiden Seiten des inneren Vorsprungteils (140) angeordnet sind und bei welchen eine Mehrzahl von zweiten Vorsprüngen (151) ein Intervall breiter als das zwischen der Mehrzahl von ersten Vorsprüngen (141) angeordnet ist, **dadurch gekennzeichnet, dass**
ein Abstand (d11) zwischen dem inneren Vorsprungteil (140) und jedem des Paars von äußeren Vorsprungteilen (150) in der zweiten Richtung allmählich nach außen in der ersten Richtung abnimmt.

2. Ultraschallschweißvorrichtung (100) nach Anspruch 1, wobei in der ersten Richtung eine Länge des Vorsprungteils (130) kleiner ist als eine Breite jedes der Mehrzahl von Elektrodenstegen (13).

3. Ultraschallschweißvorrichtung (100) nach Anspruch 1, wobei in der ersten Richtung eine Länge des inneren Vorsprungteils (140) größer ist als die jedes des Paars von äußeren Vorsprungteilen (150).

4. Ultraschallschweißvorrichtung (100) nach Anspruch 1, wobei bei dem inneren Vorsprungteil (140) die Mehrzahl von ersten Vorsprüngen (141) entlang der ersten Richtung angeordnet ist, um eine Mehrzahl von Säulen zu bilden.

5. Ultraschallschweißvorrichtung nach Anspruch 1, wobei bei jedem des Paars von äußeren Vorsprungteilen (150) die Mehrzahl von zweiten Vorsprüngen (151) entlang einer virtuellen Kurvenlinie gebildet ist.

6. Ultraschallschweißvorrichtung (100) nach Anspruch 5, wobei ein maximaler Abstand zwischen dem inneren Vorsprungteil (140) und jedem des Paars von äußeren Vorsprungteilen (150) in der zweiten Richtung 0,5 mal bis 0,75 mal eine Breite des inneren Vorsprungteils (140) in der zweiten Richtung ist.

7. Elektrodenanordnung (10), umfassend:
eine Mehrzahl von Elektroden (11), welche mit einem Separator (12) dazwischen gestapelt sind;
eine Mehrzahl von Elektrodenstegen (13), welche mit der Mehrzahl von Elektroden (11) verbunden sind; und
einen geschweißten Abschnitt (14), welcher durch ein Verschweißen der Mehrzahl von Elektrodenstegen (13) miteinander gebildet ist,
wobei der geschweißte Abschnitt (14) umfasst:
ein inneres Embo-Muster (20), welches sich entlang einer zu einer Breitenrichtung jedes der Mehrzahl von Elektrodenstegen (13) parallelen ersten Richtung erstreckt; und
ein Paar von äußeren Embo-Mustern (30), welche in einer zu der ersten Richtung orthogonalen zweiten Richtung an beiden Seiten des inneren Embo-Musters (20) angeordnet sind und in einem Intervall gebildet sind, welches breiter als das zwischen den inneren Embo-Mustern (20) ist, **dadurch gekennzeichnet, dass**
ein Abstand (d21) zwischen dem inneren Embo-Muster (20) und jedem des Paars von äußeren Embo-Mustern (30) in der zweiten Richtung allmählich nach außen in der ersten Richtung abnimmt.

8. Elektrodenanordnung (10) nach Anspruch 7, wobei der geschweißte Abschnitt (14) einen flachen Teil umfasst, welcher in der Breitenrichtung jedes der Mehrzahl von Elektrodenstegen (13) an einem Abschnitt von beiden Seiten bereitgestellt ist und an welchem das innere Embo-Muster (20) und das Paar von äußeren Embo-Mustern (30) nicht gebildet ist.

9. Elektrodenanordnung (10) nach Anspruch 8, wobei eine Breite des flachen Teils 1/45 bis 1/30 einer Breite jedes der Mehrzahl von Elektrodenstegen (13) ist.

10. Elektrodenanordnung (10) nach Anspruch 7, wobei in der ersten Richtung eine Länge des inneren Embo-Musters (20) größer ist als die jedes des Paars von äußeren Embo-Mustern (30).

11. Elektrodenanordnung (10) nach Anspruch 7, wobei in der ersten Richtung das innere Embo-Muster (20) eine Mehrzahl von Säulen bildet.

12. Elektrodenanordnung nach Anspruch 8, wobei das Paar von äußeren Embo-Mustern entlang einer virtuellen Kurvenlinie gebildet ist.

13. Elektrodenanordnung (10) nach Anspruch 12, wobei ein maximaler Abstand zwischen dem inneren Embo-Muster (20) und jedem des Paars von äußeren Embo-Mustern (30) in der zweiten Richtung 0,5 mal bis 0,75 mal eine Breite des inneren Embo-Musters (20) in der zweiten Richtung ist.

## Revendications

1. Appareil de soudage à ultrasons (100), destiné à souder entre elles une pluralité de languettes d'électrode (13) d'un ensemble d'électrodes (10), l'appareil de soudage à ultrasons (100) comprenant :
une enclume (110) destinée à être disposée au niveau d'un côté de la pluralité de languettes d'électrode (13) ;
un cornet (120) destiné à être disposé pour faire face à l'enclume (110) avec la pluralité de languettes d'électrode (13) entre eux ; et
une partie en saillie (130) positionnée sur au moins l'un de l'enclume (110) et du cornet (120) destinée à faire face à la pluralité de languettes d'électrode (13),
dans lequel la partie en saillie (130) comprend :
une partie en saillie interne (140) dans laquelle une pluralité de premières saillies (141) sont agencées le long d'une première direction parallèle à une direction de largeur des languettes d'électrode (13) ; et
une paire de parties en saillie externes (150) qui sont disposées au niveau des deux côtés de la partie en saillie interne (140) dans une seconde direction orthogonale à la première direction et dans laquelle une pluralité de secondes saillies (151) sont agencées à un intervalle plus large que celui entre la pluralité de premières saillies (141), **caractérisé en ce que**
une distance (d11) entre la partie en saillie interne (140) et chacune de la paire de parties en saillie externes (150) dans la seconde direction diminue progressivement vers l'extérieur dans la première direction.

2. Appareil de soudage à ultrasons (100) selon la revendication 1, dans lequel une longueur de la partie en saillie (130) dans la première direction est inférieure à une largeur de chacune de la pluralité de languettes d'électrode (13).

3. Appareil de soudage à ultrasons (100) selon la revendication 1, dans lequel une longueur de la partie en saillie interne (140) est supérieure à celle de chacune de la paire de parties en saillie externes (150) dans la première direction.

4. Appareil de soudage à ultrasons (100) selon la revendication 1, dans lequel, dans la partie en saillie interne (140), la pluralité de premières saillies (141) sont agencées le long de la première direction pour former une pluralité de colonnes.

5. Appareil de soudage à ultrasons selon la revendication 1, dans lequel, dans chacune de la paire de parties en saillie externes (150), la pluralité de secondes saillies (151) sont agencées le long d'une ligne courbe virtuelle.

6. Appareil de soudage à ultrasons (100) selon la revendication 5, dans lequel une distance maximale entre la partie en saillie interne (140) et chacune de la paire de parties en saillie externes (150) dans la seconde direction est de 0,5 fois à 0,75 fois une largeur de la partie en saillie interne (140) dans la seconde direction.

7. Ensemble d'électrodes (10) comprenant :
une pluralité d'électrodes (11) empilées avec un séparateur (12) entre elles ;
une pluralité de languettes d'électrode (13) connectées à la pluralité d'électrodes (11) ; et
une portion soudée (14), qui est formée par soudage de la pluralité de languettes d'électrode (13) les unes aux autres,
dans lequel la portion soudée (14) comprend :
un motif embossé interne (20) s'étendant le long d'une première direction parallèle à une direction de largeur de chacune de la pluralité de languettes d'électrode (13) ; et
une paire de motifs embossés externes (30) disposés au niveau des deux côtés du motif embossé interne (20) dans une seconde direction orthogonale à la première direction et formés à un intervalle plus large que celui entre les motifs embossés internes (20), **caractérisé en ce que**
une distance (d21) entre le motif embossé interne (20) et chacun de la paire de motifs embossés externes (30) dans la seconde direction diminue progressivement vers l'extérieur dans la première direction.

8. Ensemble d'électrodes (10) selon la revendication 7, dans lequel la portion soudée (14) comprend une partie plate qui est positionnée au niveau d'une portion des deux côtés dans la direction de largeur de chacune de la pluralité de languettes d'électrode (13) et sur laquelle le motif embossé interne (20) et la paire de motifs embossés externes (30) ne sont pas formés.

9. Ensemble d'électrodes (10) selon la revendication 8, dans lequel une largeur de la partie plate est de 1/45 à 1/30 d'une largeur de chacune de la pluralité de languettes d'électrode (13).

10. Ensemble d'électrodes (10) selon la revendication 7, dans lequel une longueur du motif embossé interne (20) est supérieure à celle de chacune de la paire de motifs embossés externes (30) dans la première direction.

11. Ensemble d'électrodes (10) selon la revendication 7, dans lequel le motif embossé interne (20) forme une pluralité de colonnes dans la première direction.

12. Ensemble d'électrodes selon la revendication 8, dans lequel la paire de motifs embossés externes sont formés le long d'une ligne courbe virtuelle.

13. Ensemble d'électrodes (10) selon la revendication 12, dans lequel une distance maximale entre le motif embossé interne (20) et chacun de la paire de motifs embossés externes (30) dans la seconde direction est de 0,5 fois à 0,75 fois une largeur du motif embossé interne (20) dans la seconde direction.
